# EUROPÄISCHE PATENTANMELDUNG

(11) **EP 3 252 933 A1**
(43) Veröffentlichungstag der Anmeldung: **06.12.2017**
(21) Anmeldenummer: 16172866.2
(22) Anmeldetag: 03.06.2016
(51) Int. Cl.: H02K 9/20

(54) **DYNAMOELEKTRISCHE MASCHINE MIT EINEM THERMOSIPHON**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Die Erfindung betrifft eine Hohlwelle (6), die einen abgeschlossenen Hohlraum bildet, der axial zumindest eine Verdampferzone (8) und eine Kondensatorzone (9) aufweist, wobei zumindest die Kondensatorzone (9) eine mikroskalige Struktur (16) aufweist, und wobei die Verdampferzone (8) und die Kondensatorzone (9) mit ihren jeweils umgebenen Elementen thermisch leitend verbindbar sind, ein Verfahren zur Herstellung einer derartigen Hohlwelle (6), als auch der Einsatz bei dynamoelektrischen Maschinen(1).

## Beschreibung

Die Erfindung betrifft eine Hohlwelle, die einen abgeschlossenen Hohlraum bildet, der axial zumindest eine Verdampferzone und eine Kondensatorzone aufweist, die Herstellung einer derartigen Hohlwelle als auch deren Einsatz bei dynamoelektrischen Maschinen.

Rotatorische dynamoelektrische Maschinen kühlen u.a. ihre Rotoren normalerweise mit einem durch einen Axiallüfter verursachten Kühlluftstrom. Falls jedoch die Wärmelast des Rotors größer ist, reicht ein derartiger Kühlluftstrom nicht mehr aus. Es werden dabei dann Hohlwellen vorgesehen, in denen ein Kühlmedium enthalten ist, das die Wärme des Rotors aus und über diese Welle axial nach außen abführt.

So zeigt beispielsweise die DE 10 2009 051 114 A1 eine elektrische Maschine unter anderem mit einem Rotor, wobei der Rotor eine Hohlwelle aufweist und wobei mittels der Hohlwelle ein abgeschlossener Hohlraum ausgebildet ist, wobei der abgeschlossene Hohlraum zur Aufnahme eines Kältemittels vorgesehen ist, wobei im abgeschlossenen Hohlraum eine dreidimensionale Transportstruktur zum Transport des Kältemittels vorgesehen ist. Damit wird die anfallende Wärme über diese Transportstruktur axial nach außen gegeben und dort über einen Kühlluftstrom rückgekühlt.

Nachteilig dabei ist, dass, um eine Rückkühlung zu erreichen, dementsprechende große Rückkühlungsflächen vorzusehen sind, um eine ausreichende Kühlung des Rotors zu erhalten.

Ausgehend davon liegt der Erfindung die Aufgabe zugrunde, eine Hohlwelle mit ausreichend Rückkühlungsflächen zu schaffen. Dabei soll die axiale Ausladung der Hohlwelle minimiert werden. Des Weiteren soll dadurch eine vergleichsweise höhere Effizienz einer dynamoelektrischen Maschine bei gleichzeitiger Kompaktheit erreicht werden.

Die Lösung der gestellten Aufgabe gelingt durch eine Hohlwelle, die einen abgeschlossenen Hohlraum bildet, der axial zumindest eine Verdampferzone und eine Kondensatorzone aufweist, wobei zumindest die Kondensatorzone eine mikroskalige Struktur aufweist, und wobei die Verdampferzone und die Kondensatorzone mit ihren jeweils umgebenen Elementen thermisch leitend verbindbar sind.

Die Lösung der gestellten Aufgabe gelingt ebenfalls durch einen Rotor, mit einer Hohlwelle nach einem der Ansprüche 1 bis 5, wobei insbesondere die Verdampferzone im Bereich eines Blechpakets des Rotors angeordnet ist

Die Lösung der gestellten Aufgabe gelingt ebenfalls durch eine dynamoelektrische Maschine mit einem Rotor, der eine derartige Hohlwelle aufweist.

Die Lösung der gestellten Aufgabe gelingt ebenfalls durch Verfahren zur Herstellung einer Hohlwelle, die einen abgeschlossenen Hohlraum bildet, der axial zumindest eine Verdampferzone und eine Kondensatorzone aufweist, wobei zumindest die Kondensatorzone eine mikroskalige Struktur aufweist, und wobei die Verdampferzone und die Kondensatorzone mit ihren jeweils umgebenen Elementen thermisch leitend verbindbar sind durch folgende Schritte:
- Bereitstellen eines Hohlwellensegments, wobei das Hohlwellensegment durch spanabhebende Bearbeitung hergestellt wird und zumindest eine zentrische Bohrung aufweist,
- axiales Anstücken eines weiteren Wellenabschnitts durch Additive Manufacturing, insbesondere durch einen 3D-Druck, wobei dadurch in axialer Verlängerung des Hohlwellensegments eine mikroskalige Struktur hergestellt wird.

Aufgrund der mikroskaligen Struktur im Bereich der Kondensatorzone ist damit die Kondensatorfläche vergleichsweise groß ausgebildet und es erfolgt auch auf einem, axial betrachtet vergleichsweise geringen Bauraum, eine ausreichende Rückkühlung des zuvor verdampften Kühlmediums. Somit ist nunmehr erfindungsgemäß ein Rotor mit einem Thermosiphon bereitgestellt, der eine erhöhte Effizienz im Kondensatorbereich bzw. Kondensatorzone aufweist. Dies wirkt sich damit vorteilhaft auch auf die Effizienz und die Kompaktheit der dynamoelektrischen Maschine aus.

Vorteilhafterweise wird diese mikroskalige Struktur durch ein additives Herstellverfahren bereitgestellt. Dabei wird nunmehr der Bereich des Kondensators, als Kondensatorzone axial direkt an ein Hohlwellensegment "angedruckt". Dieser Herstellungsprozess stellt somit eine Verbindung von klassischem Herstellverfahren mit einem neuen Herstellverfahren, dem Additive Manufacturing dar.

Dabei wird nunmehr das Hohlwellensegment beispielsweise gegossen, gedreht, gebohrt, also mittels klassischen Herstellverfahren bereitgestellt, wobei sich daran der axiale Bereich, insbesondere die Kondensatorzone mit ihren mittels additive manufacturing hergestellten konstruktiven Elementen eine mikroskalige Struktur ausbildet, wie Rippen, Stegen, Zapfen, Noppen, Poren oder Hohlkörper. Damit wird das Hohlwellensegment vor allem mit einer Wandung der Kondensatorzone zumindest mechanisch verbunden.

In einer weiteren Ausführung weist die Kondensatorzone verschiedene Materialien auf, um den jeweiligen Anforderungen bezüglich Wärmeleitung, Härte und Festigkeit der jeweiligen Abschnitte der Kondensatorzone (wie z.B. Wandung, mikroskalige Struktur, Zapfen) zu gewährleisten.

Erfindungsgemäß wird somit mittels der Innenkontur der Kondensatorzone durch spezielle Strukturen, wie z.B. feine stabförmige Elemente, porenmäßige Vernetzungen etc. eine Steigerung der Effizienz der dynamoelektrischen Maschine herbeigeführt. Dies gelingt erfindungsgemäß durch ein additives Herstellverfahren, indem schmale Materialstege von 0,1 mm bis zu einigen Millimetern, sowie Spalten von 0,01 mm bis zu ca. 2mm oder mehr realisierbar sind. Eine bevorzugte Dicke der Materialstege liegt bei ca. 1 mm, eine bevorzugte Spaltenbreite bei ca. 0,5 mm. Die dadurch herbeigeführte erhebliche Vergrößerung der Oberfläche vor allem im Inneren der Kondensatorzone erhöht die Effizienz der Rückkühlung dieses Kondensators. Mit anderen herkömmlichen Herstellverfahren, beispielsweise spanabhebenden Verfahren, sind derartige mikroskalige 3D-Strukturen nicht oder nur sehr aufwändig umsetzbar.

Durch das additive Herstellverfahren wird außerdem eine dauerhafte Gasdichtheit und bleibende Festigkeit zwischen dem Hohlwellensegment und der Kondensatorzone, vor allem der Wandung der Kondensatorzone geschaffen. Durch die Kondensation einer Verdampferflüssigkeit in dieser mikroskaligen Struktur, bildet sich nunmehr ein Film an der Innenseite der Kondensatorzone. Dieser Film behindert jedoch bisher die Berührung des Dampfes mit der, insbesondere kühleren Oberfläche, wodurch der Kondensationsprozess blockiert oder zumindest verhindert wird. Durch Ausbildung der erfindungsgemäß feinen Stege, Rippen, Spalten oder Poren durch ein additives Fertigungsverfahren, ist nunmehr in jedem Fall gewährleistet, dass Dampf an die vergleichsweise kühle Innenkontur zum Anliegen kommt und damit eine Kondensation des Kühlmediums, also der Verdampferflüssigkeit eintreten kann.

Zusätzlich wird der Innenbereich dieses Kondensators konisch in Richtung Verdampferzone ausgebildet, um das Kondensat durch die axiale Komponente der Fliehkraft im Betrieb der dynamoelektrischen Maschine von der Kondensationsfläche weg in Richtung Verdampferzone zu befördern. Damit ist eine mehr als ausreichende Förderwirkung des Kühlmediums innerhalb der Hohlwelle geschaffen.

Der die Kondensatorzone umgebende Kühler ist insbesondere als Lüfter ausgebildet, der einen hohen thermischen Leitwert beinhaltet. Dies führt zusammen mit einem durch den Lüfter generierten Luftstrom im Betrieb der dynamoelektrischen Maschine zu einer effizienten Kühlung der Kondensatorzone.

Der Lüfter ist vorzugsweise aus einem gut wärmeleitfähigen Material wie Aluminium, Kupfer oder Aluminiumlegierungen oder Kupferlegierungen. Um die Wärme nunmehr aus der Kondensatorzone zu schaffen ist es vorteilhaft, wenn die Kondensatorzone ebenfalls aus gut wärmeleitfähigem Material wie Aluminium, Kupfer, Aluminiumlegierungen oder Kupferlegierungen besteht.

In einer weiteren Ausführung weist die Kondensatorzone verschiedene Materialien auf, um den jeweiligen Anforderungen bezüglich Wärmeleitung, Härte und Festigkeit des jeweiligen Abschnitts der Kondensatorzone zu gewährleisten.

Bei den Materialen wie Aluminium, Kupfer, Aluminiumlegierungen oder Kupferlegierungen handelt es sich um weiches Material. Bei einem Lagerwechsel ist aber ein axiales Abziehen des Lüfters von der Hohlwelle notwendig. Um beim Abziehen des Lüfters eine Kaltverschweißung der beiden Randzonen von Innendurchmesser des Lüfters und Außendurchmesser der Kondensatorzone zu vermeiden, weist die äußere Schicht der Kondensatorzone, also der Sitz des Lüfters, zumindest abschnittsweise eine härtere Struktur, als das weiche Material auf. Als härteres Material eignet sich z.B. Stahl.

Damit wird verhindert, dass beim Abziehen des Kühlers eine Kaltverschweißung der beiden Randzonen von Innendurchmesser des Lüfters und Außendurchmesser der Kondensatorzone eintritt.

In einer weiteren Ausführung weist die Oberfläche der Kondensatorzone beide Materialien auf, d.h. gut wärmeleitende Materialien wechseln sich nach einem vorgegebenen Muster, mit vergleichsweise harten Abschnitten und ggf. weniger gut wärmeleitenden Materialien ab. Damit wird eine ausreichende Wärmeabfuhr aus der Kondensatorzone zum Lüfter geschaffen. Das gut wärmeleitende Material ragt abschnittsweise - also in den Abschnitten in denen das härtere Material nicht vorhanden ist, bis an den Außendurchmesser der Kondensatorzone. Bei einer Demontage des Kühlers übernimmt das härtere Material die Tragfunktion, wobei ein Aufreiben der Oberfläche, also eine Kaltverschweißung vermieden wird.

Die Kondensatorzone weist also nach innen eine mikroskalige Struktur auf, während sie nach außen zwei unterschiedliche Materialien aufweist, um sowohl die Wärmeleitung zum Lüfter als auch die Kaltverschweißung bei wartungsbedingtem Abziehen des Lüfters zu vermeiden.

Die Erfindung sowie weitere vorteilhafte Ausgestaltungen werden anhand der prinzipiell dargestellten Ausführungsbeispiele näher beschrieben. Dabei zeigen:
- FIG 1: einen prinzipiellen Längsschnitt durch eine dynamoelektrische rotatorische Maschine,
- FIG 2: eine mikroskalige Struktur der Kondensatorzone,
- FIG 3: eine perspektivische Ansicht der Kondensatorzone,
- FIG 4: eine weitere mikroskalige Struktur der Kondensatorzone,
- FIG 5: axial verlaufende Rippen auf einem konisch geformten Element in der Kondensatorzone,
- FIG 6: einen Längsschnitt durch eine Hohlwelle.

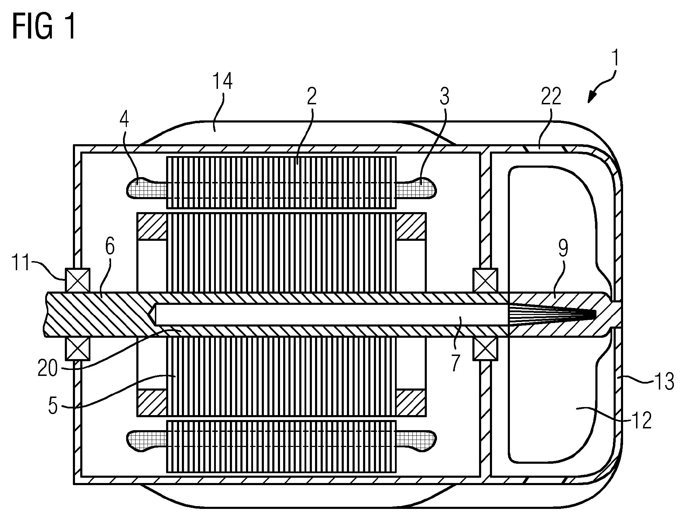

FIG 1 zeigt eine rotatorische dynamoelektrische Maschine 1, die einen Stator 2 und einen Rotor 5 aufweist. Der Rotor 5 ist in dieser Ausführungsform als Käfigläufer ausgeführt, kann jedoch auch ein permanenterregter Rotor, ein Rotor einer Reluktanzmaschine oder ein Rotor mit einem Wicklungssystem sein.

Der Rotor 5 ist drehfest mit einer Hohlwelle 6 verbunden, wobei die Hohlwelle 8 in Lagern 11 gelagert ist. Unter einer drehfesten Verbindung ist dabei eine drehmomentenübertragende Verbindung, wie z.B. eine Schrumpfverbindung oder eine Passfeder-Verbindung oder eine andere Welle-Nabe-Verbindungen zwischen Blechpaket des Rotors 5 und der Hohlwelle 8 zu verstehen. Ein Gehäuse der elektrischen Maschine 1 trägt die Lagerschilde. Am Gehäuse radial außerhalb des Stators 2, befinden sich axial verlaufende Kühlrippen 14, die einen von einem Lüfter 12 erzeugten Kühlluftstrom entlang des Gehäuses führen. Der Lüfter 12 ist dabei in einer Lüfterhaube 13 untergebracht, die optional Öffnungen 22 aufweist.

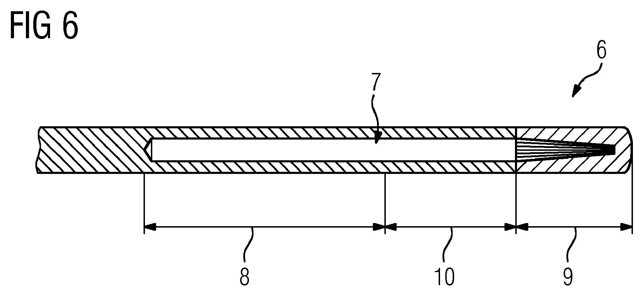

Die Hohlwelle 6 ist in dieser Ausführung durch eine zentrale axiale Ausnehmung 7, z.B. eine Bohrung hohl ausgeführt und weist gemäß FIG 6 eine Verdampferzone 8 im Bereich des Rotors 5 auf, optional eine Transportzone 10, und eine Kondensatorzone 9. Die axiale Erstreckung der Verdampferzone 8 der Hohlwelle 6 entspricht zumindest der axialen Erstreckung des Blechpakets des Rotors 5.

In dieser Ausführung weist die Hohlwelle 6 eine zentrale Bohrung auf, es ist aber auch denkbar, dass mehrere achsparallele Bohrungen vorhanden sind, die in die dann dementsprechend ausgestaltete Kondensatorzone 9 münden.

In der Kondensatorzone 9 findet die Rückkühlung des Kühlmediums, z.B. einer Verdampferflüssigkeit statt. Dabei ist entscheidend, dass in einem vergleichsweise axial kurzen Bereich - also der Kondensatorzone 9 - eine effiziente Rückkühlung der Verdampferflüssigkeit eintritt, um somit eine ausreichende Kühleffizienz der gesamten dynamoelektrischen Maschine 1 zu gewährleisten. Der vergleichsweise axial kurze Abschnitt der Kondensatorzone 9 gewährleistet außerdem einen kompakten Aufbau der dynamoelektrischen Maschine 1.

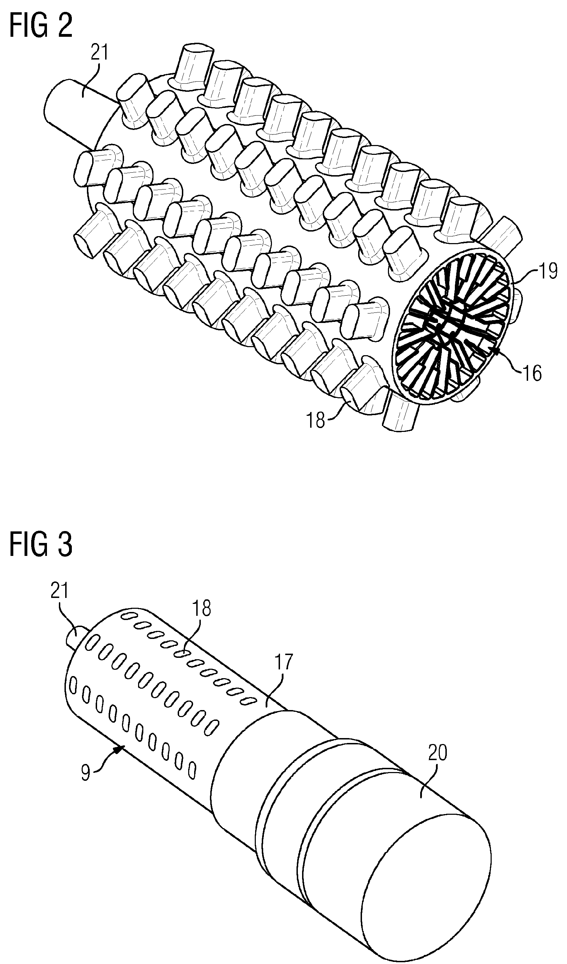

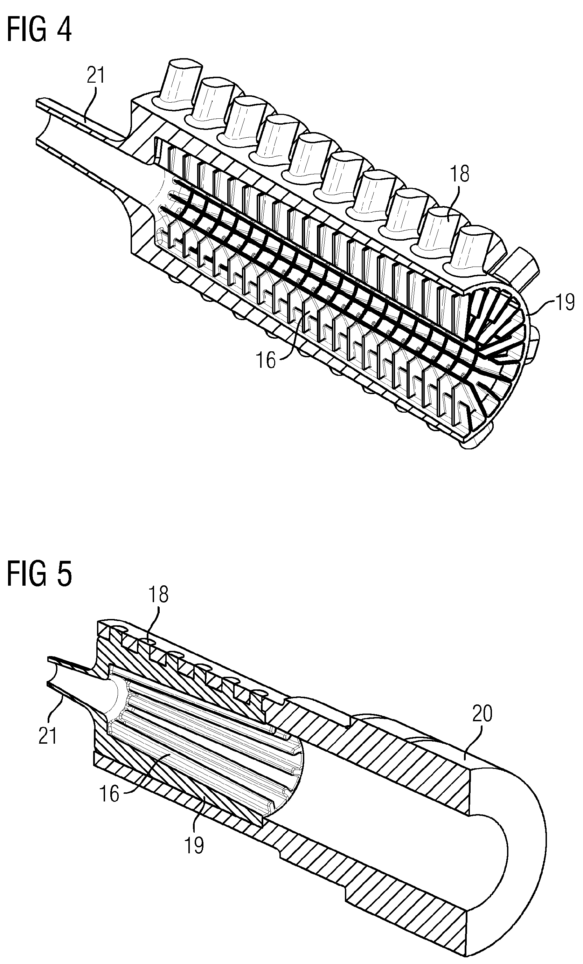

Eine derartige Kondensatorzone 9 kann durch additive Fertigungsverfahren sehr mikroskalig, wie z.B. in FIG 2 und FIG 4 dargestellt, ausgeführt sein. Die einzelnen Stegbreiten, Rippenhöhen, Stegdurchmesser, Abstände der Stege/Rippen befinden sich im Millimeterbereich und/oder darunter. Somit ist eine ausreichende Fläche geschaffen, die einen effizienten Rückkühlungseffekt des Kühlmediums gewährleistet. FIG 2 zeigt den Kern der Kondensatorzone 9, der walzenbürstenähnlich ausgestaltet ist. Diese mikroskaligen Kondensatorflächen des inneren Hohlraumes 7 stehen in gut wärmeleitendem Kontakt mit Zapfen 18. Um diese Zapfen 18 herum ist das härtere Material - also zum Beispiel das Wellenmaterial 17 angeordnet. Über diese Zapfen 18 wird die Wärme an den Lüfter 12 weitergeleitet.

Als additives Fertigungsverfahren zur Bearbeitung von Metallen zur Herstellung der Kondensatorzone 9 eignen sich vor allem das selektive Lasersintern und das selektive Laserschmelzen mit speziell für diese Herstellung geeignetem Energieeintrag von ca. highest nominal laser power (NLP) von 1,6 bis 2,5 Ws/mm². Damit wird eine ausreichende Dichtheit und mechanische Stabilität zwischen Hohlwellensegment 20 und Kondensatorzone 9 geschaffen. Oberhalb dieses Energieeintrages muss mit lokalen unerwünschten Effekten aufgrund Überhitzung gerechnet werden. Unterhalb dieses Energieeintrages tritt zunehmende Porenbildung, die ggf. die Gasdichtheit und/oder die mechanische Festigkeit beeinträchtigt.

Außerdem ist durch geeignete additive Fertigungsverfahren der Aufbau der Kondensatorzone 9 mit mehreren Materialen, insbesondere zwei Materialien umsetzbar.

FIG 3 zeigt den angedruckten Bereich der Kondensatorzone 9 an ein Hohlwellensegment 20, die zusammen dann die Hohlwelle 6 bilden. An der Oberfläche der Kondensatorzone 9 sind Materialien unterschiedlicher Härte- und Wärmeleitfähigkeit vorhanden, um einen ausreichenden Sitz eines Lüfters 12 auf der Kondensatorzone 9 zu gewährleisten, der als Kühler fungiert.

Dabei wechseln sich sowohl in axialer Richtung als auch in Umfangsrichtung die gut wärmeleitenden Zapfen 18 mit dem härteren Wellenmaterial 17 ab. Die flächenmäßigen Verhältnisse der beiden Materialen richten sich dabei nach dem erforderlichen Wärmetransport und der Befestigung des Lüfters 12 auf der Kondensatorzone 9.

Diese Kombination zweier unterschiedlicher Materialien in bzw. auf der Kondensatorzone 9 vermeidet eine Kaltverschweißung zwischen den Materialien der Kondensatorzone 9 und des Innendurchmessers des Lüfters 12 bei einem Abziehen des Lüfters 12 von der Hohlwelle 7. Dies ist z.B. notwendig, um einen Lageraustausch vorzunehmen.

Die Kondensatorzone 9, also der axiale Abschnitt, der sich an ein Hohlwellensegment 20 anschließt, ist nunmehr folgendermaßen aufgebaut:
Es gibt einen Rückkühlbereich, der die mikroskalige Struktur 16, wie oben beschrieben aufweist, wobei diese Struktur 16 thermisch leitend mit der Wandung 19 der Kondensatorzone 9 verbunden ist. Radial außerhalb der Wandung 19 sind die angesprochenen im Wesentlichen radial angeordneten Wärmeleitelemente, wie radiale Noppen oder Zapfen 18 vorgesehen. Wobei diese Wärmeleitelemente unterschiedlichste geometrische Querschnittsformen aufweisen können. Damit können sowohl die Kondensatorzonen 9 identische Noppen- oder Zapfenformen als auch unterschiedlichste Noppenformen aufweisen.

FIG 4 und 5 zeigen weitere fein-mikroskalige Strukturen 16, die teilweise im Inneren mit einem im Wesentlichen konischen Verlauf Richtung Verdampferzone 8 ausgeführt sind, um einen dementsprechenden Rücktransport des Kühlmediums in die Verdampferzone 8 der Hohlwelle 6 zu erhalten.

Die mikroskalige Struktur 16 weist dabei grundsätzlich Rippen und/oder Prismen und/oder Hohlkörper und/oder oberflächenvergrößernde Strukturen auf.

FIG 5 zeigt, in einem Längsschnitt das Hohlwellensegment 20, an das sich die Kondensatorzone 9 axial anschließt. Die wärmeleitfähigen Zapfen ragen im Wesentlichen radial aus der wärmeleitenden Wandung 19. Zwischen den Zapfen 18 ist, wie oben ausgeführt das härtere Material vorgesehen, das wie im vorliegenden Fall aus dem Material des Hohlwellensegments 20 sein kann, aber ebenso ein anderes härteres Material.

FIG 6 zeigt die axial verlaufenden Abschnitte der Hohlwelle 6, wobei insbesondere an einem axialen Ende der Kondensatorzone 9 angedruckt ist. Die als Thermosiphon ausgebildete Hohlwelle 6 weist in axialer Richtung einen Verdampferzone 8, optional eine Transportzone 10 und die Kondensatorzone 9 auf. Das Hohlwellensegment 20 weist in dieser Ausführung die Verdampferzone 8 und eine Transportzone 10 auf. In der Verdampferzone 8 wird ein Kühlmedium unter Aufnahme von Wärme verdampft und in der Kondensatorzone 9 rückgekühlt. Insbesondere in der Transportzone 10 können geeignete Füllkörper in der Hohlwelle 6 den Transport des verdampften und/oder rückgekühlten Kühlmediums verbessern. Dies ist dann vor allem von Vorteil, wenn die Hohlwelle 6 in unterschiedlichsten räumlichen Anordnungen eingesetzt ist, beispielsweise bei Hohlwellen in Fahrzeugen, die im schwergängigen Gelände unterwegs sind.

Die Kondensatorzone 9 weist einen axial verlaufenden Stutzen 21 auf, über den beispielsweise das Kühlmittel zugeführt und/oder der Betriebsdruck des Thermosiphons eingestellt werden kann. Der Stutzen 21 ist im Betrieb der dynamoelektrischen Maschine 1 verschlossen, um den Kühlkreislauf aufrechterhalten zu können.

Der Rotor 5 weist nunmehr als magnetflussleitendes Element ein axial geschichtetes Blechpaket oder ein einteilig ausgebildetes im Wesentlichen zylindrisches magnetflussführendes Teil auf. Dieses magnetflussleitende Element ist drehfest mit der Hohlwelle 6, insbesondere mit der Verdampferzone 8 oder dem Hohlwellensegment 20 verbunden.

Derartige dynamoelektrische Maschinen 1 werden u.a. als Antrieb, insbesondere in der Fahrzeugtechnik, bei E-Cars, Schienenfahrzeugen, Mining-Trucks etc. verwendet, da nunmehr auch ohne eine Durchzugsbelüftung eine ausreichende Kühlung des Rotors 5 geschaffen ist. Eine Durchzugsbelüftung führt bei stark staubhaltiger Luft und/oder alternierendem Betrieb des Motors mit Stillstandszeiten zu unzureichender Kühlung vor allem des Rotors 5.

In der Fahrzeugtechnik sind aufgrund der dort vorgegebenen eingeschränkten Platzverhältnisse kompakte, leistungsstarke Antriebe gefordert, die nunmehr durch eine kompakte dynamoelektrische Maschine 1 erfüllt werden.

## Patentansprüche

1. Hohlwelle (6), die einen abgeschlossenen Hohlraum bildet, der axial zumindest eine Verdampferzone (8) und eine Kondensatorzone (9) aufweist, wobei zumindest die Kondensatorzone (9) eine mikroskalige Struktur (16) aufweist, und wobei die Verdampferzone (8) und die Kondensatorzone (9) mit ihren jeweils umgebenen Elementen thermisch leitend verbindbar sind.

2. Hohlwelle (6) nach Anspruch 1, **dadurch gekennzeichnet , dass** die mikroskalige Struktur (16) als rippenartige Struktur und/oder zapfenförmige Struktur und/oder porenartige Vernetzung ausgebildet ist.

3. Hohlwelle (6) nach Anspruch 1 oder 2, **dadurch gekennzeichnet, dass** die Kondensatorzone (9) eine innere Konizität aufweist, die sich insbesondere Richtung Verdampferzone (8) erweitert.

4. Hohlwelle (6) nach einem der vorhergehenden Ansprüche, **dadurch gekennzeichnet, dass** die Hohlwelle (6), zumindest im Bereich der Kondensatorzone (9) unterschiedliche Materialien aufweist.

5. Hohlwelle (6) nach Anspruch 4, **dadurch gekennzeichnet, dass** die Kondensatorzone (9) an der Oberfläche unterschiedliche Materialien aufweist.

6. Rotor (5), mit einer Hohlwelle (6) nach einem der Ansprüche 1 bis 5, wobei insbesondere die Verdampferzone (8) im Bereich eines Blechpakets oder eines sonstigen magnetflussleitendes Elements des Rotors (5) angeordnet ist.

7. Dynamoelektrische Maschine (1) mit einem Stator (2) und einem Rotor (5) nach Anspruch 6 und einem Kühler.

8. Dynamoelektrische Maschine (1) nach Anspruch 7, **dadurch gekennzeichnet, dass** der Kühler ein Lüfter (12) ist, der thermisch leitend mit der Kondensatorzone (9) verbunden ist.

9. Verfahren zur Herstellung einer Hohlwelle (6), die einen abgeschlossenen Hohlraum bildet, der axial zumindest eine Verdampferzone (8) und eine Kondensatorzone (9) aufweist, wobei zumindest die Kondensatorzone (9) eine mikroskalige Struktur (16) aufweist, und wobei die Verdampferzone (8) und die Kondensatorzone (9) mit ihren jeweils umgebenen Elementen thermisch leitend verbindbar sind durch folgende Schritte:
- Bereitstellen eines Hohlwellensegments, wobei das Hohlwellensegment durch spanabhebende Bearbeitung hergestellt wird und zumindest eine zentrische Bohrung aufweist,
- axiales Anstücken eines weiteren Wellenabschnitts durch Additive Manufacturing, insbesondere durch einen 3D-Druck, wobei dadurch in axialer Verlängerung des Hohlwellensegments Bohrung eine mikroskalige Struktur (16) hergestellt wird.

10. Verfahren nach Anspruch 9, **dadurch gekennzeichnet, dass** die mikroskalige Struktur (16) aus zumindest zwei bzgl. Wärmeleitfähigkeit und/oder Härte unterschiedlichen Materialien gebildet wird.

11. Verfahren nach Anspruch 10, **dadurch gekennzeichnet, dass** durch die unterschiedlichen Materialien zumindest an der Oberfläche der Kondensatorzone (9) ein vorgegebenes Muster gebildet wird.

12. Verfahren zur Herstellung eines Rotors (5), mit einer Hohlwelle (6) hergestellt nach einem der Ansprüche 9 bis 11, indem ein Blechpaket oder ein sonstiges magnetflussleitendes Element des Rotors (5) mit der Hohlwelle (6), insbesondere der Verdampferzone (8) der Hohlwelle (6) drehfest verbunden wird.

13. Fahrzeug, E-Car, Schienenfahrzeug, Mining-Truck mit zumindest einer dynamoelektrischen Maschine (1) nach Anspruch 7 oder 8.
